# EUROPÄISCHE PATENTSCHRIFT

(11) **EP 1 849 578 B1**
(45) Veröffentlichungstag und Bekanntmachung des Hinweises auf die Patenterteilung: **18.08.2010**
(21) Anmeldenummer: 07006979.4
(22) Anmeldetag: 03.04.2007
(51) Int. Cl.: B29C 47/92, B29C 49/02, B29C 49/78, F16J 3/04, B29C 49/04

(54) **Verfahren und Vorrichtung zum Herstellen eines schlauchartigen Gegenstands aus thermoplastischem Kunststoff**
Method and device for manufacturing a hose-like object made of thermoplastic material
Procédé et dispositif destinés à la fabrication d'un objet de type tuyau en matière synthétique thermoplastique

(30) Priorität: 24.04.2006 DE 102006018883
(43) Veröffentlichungstag der Anmeldung: 31.10.2007
(73) Patentinhaber: Ossberger GmbH + Co., 91781 Weissenburg (DE)
(72) Erfinder: Kiefer, Dieter, 91781 Weissenburg (DE)
(74) Vertreter: Heyer, Volker

(56) Entgegenhaltungen:
- EP-A1- 0 535 254
- US-A1- 2002 182 355
- HOCHGREBE M: "AUTOMATISIERUNG VON BLAS- UND SPRITZBLASMACHINEN" KUNSTSTOFFBERATER, KUNSTSTOFF VERLAG. ISERNHAGEN, DE, Bd. 39, Nr. 7/8, 1. Juli 1994 (1994-07-01), Seiten 14-19, XP000460715 ISSN: 0172-6374
- HAUB K: "BLASGEFORMTE TPE-ACHSMANSCHETTEN BLOW-MOULDED TPE AXLE SLEEVES" KUNSTSTOFFE, CARL HANSER VERLAG, MUNCHEN, DE, Bd. 86, Nr. 3, 1. März 1996 (1996-03-01), Seiten 332-334, XP000587709 ISSN: 0023-5563

## Beschreibung

Die vorliegende Erfindung betrifft ein Verfahren und eine Vorrichtung zum Herstellen eines schlauchartigen Gegenstandes aus thermoplastischem Kunststoff, beispielsweise eines Faltenbalges, dessen Wandstärke über seine Länge einstellbar ist.

Ein Verfahren und eine Vorrichtung dieser Art sind beispielsweise aus EP 0 535 254 B1 der Anmelderin bekannt. Die dort offenbarte Vorrichtung umfasst eine Düse mit einem Düsenmundstück und einem Düsenkörper, die zwischen sich eine ringförmige Düsenöffnung bilden, wobei der Düsenkörper relativ zum Düsenmundstück bewegbar ist, um die Querschnittsfläche der Düsenöffnung zu ändern, eine Extrudiervorrichtung mit einem Spritzkolben, der bei seiner Bewegung eine durch den Spritzkolbenweg bestimmte Menge plastifizierten Kunststoffs durch die Düse extrudiert, um ein schlauchartiges Kunststoffgebilde zu erzeugen, eine Zieheinheit, die aus einer Ausgangsstellung angrenzend an der Düse in Richtung weg von der Düse bewegbar ist, um das aus der Düse austretende schlauchartige Kunststoffgebilde während des Extrusionsvorgangs zu führen, wobei der Weg der Zieheinheit die Länge des schlauchartigen Kunststoffgebildes bestimmt.

Bei der dort offenbarten Vorrichtung sind Steuereinrichtungen für die Antriebe des Düsenkörpers, des Spritzkolbens und der Zieheinheit vorgesehen, die einen Rechner und Wegsensoren für diese Bewegungen umfassen, wobei der Rechner entsprechend einem vorgebbaren Programm die drei Antriebe steuert. Die Steuerung läuft hierbei so ab, dass die Geschwindigkeitszunahme der Zieheinheit bei ihrer Anfangsbewegung gesteuert ist und dass während der weiteren Bewegung der Zieheinheit einem kontinuierlich gesteuerten Geschwindigkeitsverhalten der Zieheinheit eine oszillierend größer und kleiner gesteuerte Spaltbreite der Düsenöffnung derart überlagert ist, dass die Dicke der sich bildenden Wand sich wellenförmig, über Täler und Höhen, ändert. Bei dem auf diese Weise hergestellten Gegenstand handelt es sich um einen Vorformling zum Blasformen eines Faltenbalges.

Eine Vorrichtung dieser Art, von der im Oberbegriff der Patentansprüche 1 und 9 ausgegangen wird, ist aus Artikeln von HOCHGREBE M: Automatisierung von Blas- und Spritzblasmaschinen" Kunststoffberater, Kunststoff Verlag. Isernhagen, DE, Bd. 39, Nr. 7/8, 1. Juli 1994 (1994-07-01), Seiten 14-19, XP000460715 ISSN: 0172-6374, und von HAUB K: "Blasgeformte TPE-Achsmanschetten Blowmoulded TPE Axle Sleeves" Kunststoffe, Carl Hanser Verlag, München, DE, Bd. 86, Nr. 3, 1. März 1996 (1996-03-01), Seiten 332-334, XP000587709 ISSN: 0023-5563, bekannt. Bei der dort offenbarten Vorrichtung der Anmelderin werden die Bewegungen der Zieheinheit und des Spritzkolbens geschwindigkeitsgeregelt und die Bewegung des Düsenkörpers abhängig vom Weg der Zieheinheit geregelt.

Der vorliegenden Erfindung liegt die Aufgabe zugrunde, ein Verfahren und eine Vorrichtung dieser Gattung so weiterzubilden, dass sich mit ihnen beliebig geformte schlauchartige Gegenstände aus thermoplastischem Kunststoff mit präzise einstellbarer Wandstärke über der Länge des Gegenstandes herstellen lassen.

Das Verfahren gemäß der vorliegenden Erfindung zum Lösen dieser Aufgabe ist in Patentanspruch 1 definiert. Die Vorrichtung gemäß der vorliegenden Erfindung zum Lösen dieser Aufgabe ist in Patentanspruch 8 definiert.

Gemäß der vorliegenden Erfindung werden die Bewegungen der Zieheinheit, des Spritzkolbens und des Düsenkörpers so geregelt, dass die Bewegung der Zieheinheit entsprechend einem frei einstellbaren Geschwindigkeitsprofil über dem Weg der Zieheinheit abläuft, dass die Bewegung des Spritzkolbens entsprechend einem frei einstellbaren Geschwindigkeitsprofil über dem Weg des Spritzkolbens abläuft, und dass die Bewegung des Düsenkörpers gemäß einem frei einstellbaren Positionsprofil über dem Weg der Zieheinheit oder dem Weg des Spritzkolbens abläuft, so dass die Bewegung des Düsenkörpers mit gleicher Dauer wie die Bewegung der Zieheinheit oder des Spritzkolbens erfolgt.

Auf diese Weise sind der Geschwindigkeitsverlauf des Spritzkolbens einerseits und der Geschwindigkeitsverlauf der Abzieheinheit andererseits unabhängig voneinander frei einstellbar, während die Bewegung des Düsenkörpers und damit die Änderung der Düsenöffnung gewissermaßen als "slave" der Bewegung des Spritzkolbens oder der Abzieheinheit folgt.

Da die Geschwindigkeitsprofile für die Bewegungen des Spritzkolbens und der Abzieheinheit frei einstellbar sind, können die Herstellgenauigkeit beeinträchtigende Einflüsse wie Nachquellen des plastifizierten Kunststoffes oder Durchhängen des schlauchartigen Kunststoffgebildes bereits bei der Prozesseinstellung optimal berücksichtigt werden. Auf diese Weise kann die Wandstärke des schlauchartigen Kunststoffgebildes und damit des fertigen schlauchartigen Gegenstandes über seiner Länge mit extrem hoher Genauigkeit eingestellt werden.

Das erfindungsgemäße Verfahren bietet die Möglichkeit, die Bewegungen der Zieheinheit und des Spritzkolbens zur selben Zeit starten zu lassen, im Übrigen jedoch asynchron ablaufen zu lassen, so dass dann die Dauer der Bewegung der Zieheinheit und die Dauer der Bewegung des Spritzkolbens ungleich sind. Hierdurch können, wie bereits erwähnt, den Prozessablauf störende Einflüsse optimal berücksichtigt werden.

Grundsätzlich ist jedoch auch eine automatische "Synchronisation" der Bewegungen des Spritzkolbens und des Spritzwerkzeuges möglich. Hierzu ist in weiterer Ausgestaltung der Erfindung die Regelanlage so einstellbar, dass das Geschwindigkeitsprofil für die Zieheinheit automatisch an das Geschwindigkeitsprofil für die Bewegung des Spritzkolbens, oder umgekehrt, angepasst wird, um die Dauer der Bewegungen der Zieheinheit und des Spritzkolbens gleich zu machen. Dies hat den Vorteil, dass bei einer Änderung beispielsweise des Geschwindigkeitsprofils des Spritzkolbens keine erneute manuelle Einstellung des Geschwindigkeitsprofils für die Bewegung der Zieheinheit erforderlich ist.Vorzugsweise dient das mit dem erfindungsgemäßen Verfahren hergestellte schlauchartige Kunststoffgebilde als Vorformling für einen Blasformvorgang, bei dem aus dem Vorformling beispielsweise ein Faltenbalg hergestellt wird. Es sei jedoch darauf hingewiesen, dass sich mit dem erfindungsgemäßen Verfahren beliebige schlauchartige Gegenstände aus thermoplastischem Kunststoff herstellen lassen, deren Wandstärke über ihrer Länge veränderlich ist und mit hoher Genauigkeit eingestellt werden soll.

Weitere vorteilhafte Ausgestaltungen der Erfindung gehen aus den abhängigen Patentansprüchen hervor.

Anhand der Zeichnungen wird ein Ausführungsbeispiel der Erfindung näher erläutert. Es zeigt:
Fig. 1 eine weitgehend schematisierte Schnittdarstellung einer Vorrichtung zum Herstellen eines Vorformlings zum Blasformen eines Faltenbalges;
Fig. 2 eine stark schematisierte Darstellung einer Regelanlage für die Vorrichtung der Fig. 1;
Fign. 3 bis 5 Diagramme für den Bewegungsablauf der Zieheinheit, des Spritzkolbens und des Düsenkörpers der Vorrichtung in Fig. 1.

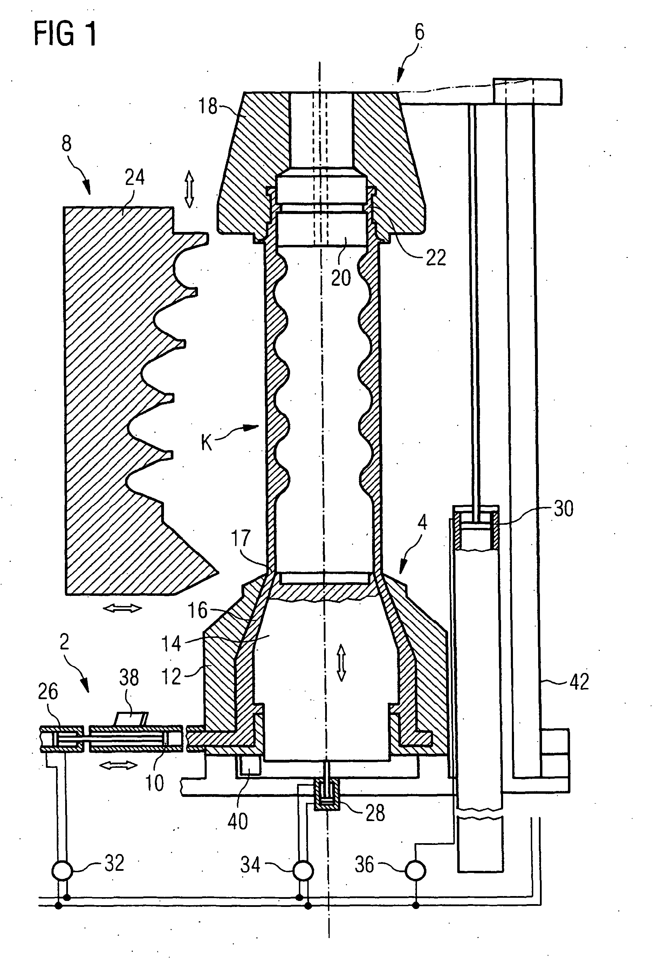

Die in Fig. 1 dargestellte Vorrichtung entspricht in ihrem grundsätzlichen Aufbau der Vorrichtung gemäß der eingangs erwähnten EP 0 535 254 B1. Sie dient zum Herstellen eines schlauchartigen Gegenstandes aus thermoplastischem Kunststoff in Form eines Vorformlings zum Blasformen eines Faltenbalges. Hierbei handelt es sich lediglich um ein Ausführungsbeispiel der Erfindung. Wie bereits erwähnt, lassen sich durch Verfahren und Vorrichtung der Erfindung beliebige schlauchartige Gegenstände aus thermoplastischem Kunststoff herstellen, deren Wandstärke über ihrer Länge in vorgegebener Weise und mit hoher Präzision eingestellt werden soll.

Da der grundsätzliche Aufbau der Vorrichtung der Fig. 1 aus der vorgenannten Patentschrift bekannt ist, beschränkt sich die folgende Beschreibung auf die zur Erläuterung der Erfindung wesentlichen Komponenten.

Die Vorrichtung der Fig. 1 besteht aus einer nur bruchstückhaft angedeuteten Extrudiervorrichtung 2, einer Düse 4, einer Abzieheinheit 6 und einer Blasform 8.

Die Extrudiervorrichtung 2 umfasst einen geradlinig bewegbaren Spritzkolben 10 zum Ausstoßen plastifizierten Kunststoffes durch die Düse 4. Die Düse 4 setzt sich aus einem Düsenmundstück 12 und einem inneren, abschnittsweise konisch ausgebildeten Düsenkörper 14 zusammen, die zwischen sich einen Düsenkanal 16 bilden, welcher in einer ringförmigen Düsenöffnung 17 endet. Wie durch einen Doppelpfeil angedeutet, ist der Düsenkörper 14 relativ zu dem Düsenmundstück 12 geradlinig verschiebbar, um die Querschnittsfläche der Düsenöffnung 17 zu ändern.

Die Zieheinheit 6 umfasst einen Formkörper 18 und einen darin angeordneten Blasdorn 20, die zwischen sich einen Formhohlraum 22 begrenzen. Wie ebenfalls durch einen Doppelpfeil angedeutet, ist die Zieheinheit 6 auf der Längsachse der Düse 4 geradlinig hin und her bewegbar.

Die Blasform 8 weist zwei Blasformhälften auf, von denen nur eine Blasformhälfte 24 dargestellt ist und die, ebenfalls durch einen Doppelpfeil angedeutet, quer zur Längsachse der Düse 4 und der Abzieheinheit 6 hin und her bewegbar sind.

Zum Bewegen des Spritzkolbens 10, des Düsenkörpers 14 und der Zieheinheit 6 ist jeweils ein hydraulischer Antrieb 26 bzw. 28 bzw. 30 in Form einer Kolben-Zylinder-Einheit vorgesehen, deren Druckbeaufschlagung jeweils durch ein Regelventil 32 bzw. 34 bzw. 36 geregelt wird.

Zu Beginn der Herstellung des schlauchartigen Kunststoffgebildes K befindet sich die Zieheinheit 6 in einer Ausgangsstellung angrenzend an der Düse 4. Der Spritzkolben 10 wird dann von seinem Antrieb 26 in Ausstoßrichtung bewegt, wodurch eine durch den Spritzkolbenweg bestimmte Menge plastifizierten Kunststoffes aus einem Massespeicher (nicht gezeigt) über den Düsenkanal 16 durch die Düsenöffnung 17 ausgepresst wird. Hierbei entsteht zunächst durch einen Spritzgießvorgang ein Kopfteil des herzustellenden Kunststoffgebildes K in dem Formhohlraum 22 der Zieheinheit 6. Nach Fertigstellung dieses Kopfteils erfolgt der eigentliche Extrusionsvorgang, bei dem die Zieheinheit 6 von ihrem Antrieb 30 aus der Ausgangsstellung von der Düse 4 weg bewegt wird. Hierbei führt die Zieheinheit 6 das Kunststoffgebilde K an seinem Kopfteil, wobei der Weg der Zieheinheit 6 die Länge des Kunststoffgebildes K bestimmt.

Während des Extrusionvorganges wird der Düsenkörper 14 von seinem Antrieb 28 relativ zum Düsenmundstück 12 bewegt, um die Querschnittsfläche der Düsenöffnung 17 entsprechend der einzustellenden Wandstärke des Kunststoffgebildes K zu ändern. Am Ende des Extrusionsvorganges wird das Ende des Kunststoffgebildes K durch Anlage des Düsenkörpers 14 am Düsenmundstück 12 abgeklemmt.

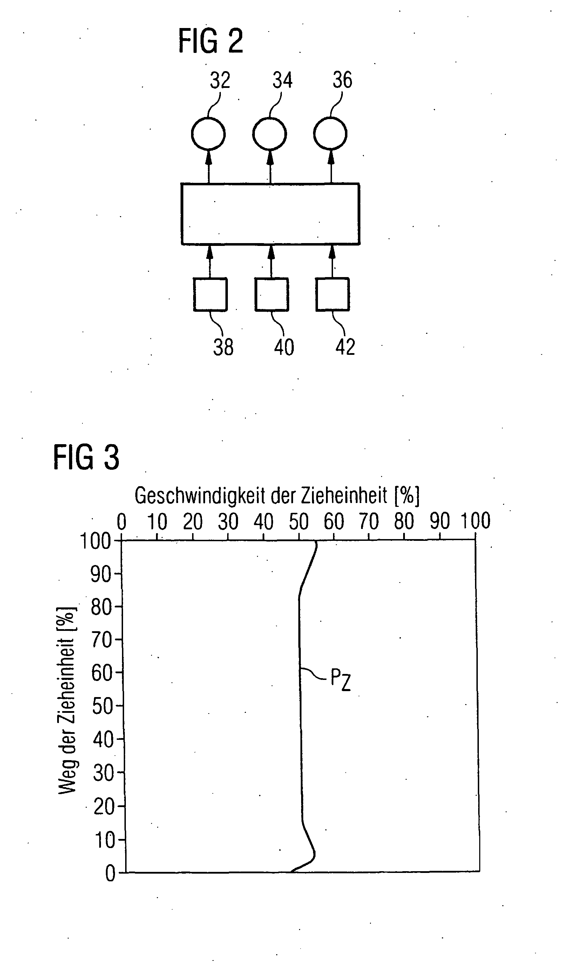

Zum Regeln der Bewegungen des Spritzkolbens 10, des Düsenkörpers 14 und der Zieheinheit 6 ist eine Regelanlage vorgesehen, die im dargestellten Ausführungsbeispiel Wegsensoren 38, 40, 42 für die Bewegungen des Spritzkolbens 10, des Düsenkörpers 14 und der Zieheinheit 6 sowie ein Betriebssteuergerät in Form eines Rechners 44 (Fig. 2) umfasst. Wie in Fig. 2 schematisch angedeutet ist, werden die Ausgangssignale der Wegsensoren 38, 40, 42 dem Rechner 44 zugeführt, der einen Regler zum Erzeugen von Stellsignalen für die Regelventile 32, 34, 36 und damit für die Antriebe 26, 28, 30 enthält, wie im Folgenden genauer erläutert wird:

In dem Rechner 44 sind Sollwertkurven für die Bewegungen des Spritzkolbens 10, des Düsenkörpers 14 und der Zieheinheit 6 gespeichert, wie sie in den Fign. 3 bis 5 beispielhaft veranschaulicht werden:

Wie das Diagramm der Fig. 3 zeigt, ist für die Bewegung der Zieheinheit 6 eine Sollwertkurve in Form eines Geschwindigkeitsprofils P_{z} über dem Weg der Zieheinheit 6 vorgesehen. Das Geschwindigkeitsprofil P_{z} stellt somit die Sollgeschwindigkeit der Zieheinheit 6 über dem Weg der Zieheinheit 6 dar, wobei die Geschwindigkeit und der Weg in Form von Prozentzahlen angegeben sind.

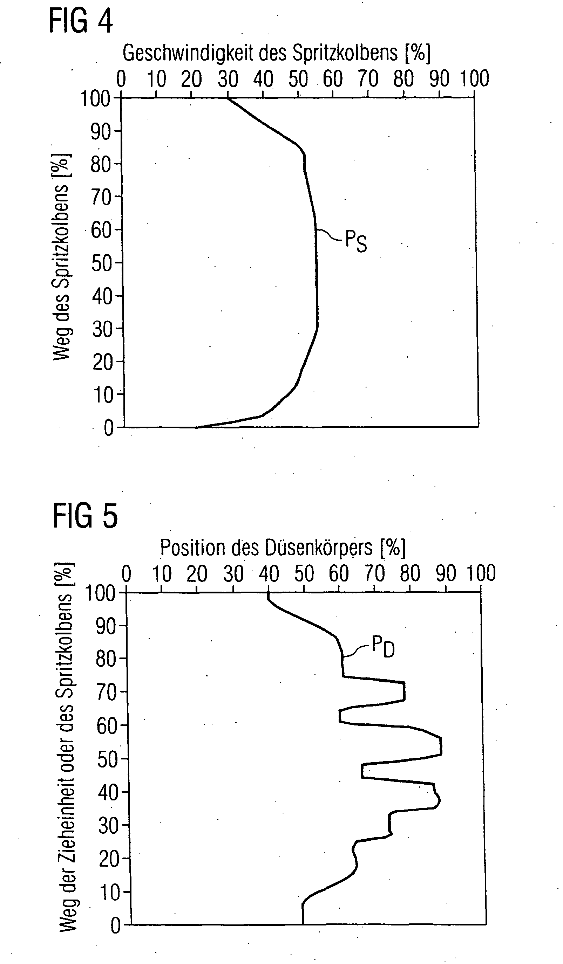

Wie Fig. 4 zeigt, ist für die Geschwindigkeit des Spritzkolbens 10 eine Sollwertkurve in Form eines Geschwindigkeitsprofils Pₛ über dem Weg des Spritzkolbens 10 vorgesehen, wobei Geschwindigkeit und Weg wieder in Form von Prozentzahlen angegeben sind.

Fig. 5 zeigt, dass für die Bewegung des Düsenkörpers 14 eine Sollwertkurve in Form eines Positionsprofils P_{D} über dem Weg der Zieheinheit 6 oder dem Weg des Spritzkolbens 10 vorgesehen ist. Für die Bewegung des Düsenkörpers 14 ist somit nicht die Geschwindigkeit, sondern die Position (der Weg) vorgegeben.

Die Diagramme der Fign. 3 bis 5 stellen naturgemäß lediglich Beispiele für die Geschwindigkeitsprofile P_{z}, Pₛ und das Positionsprofil P_{D} dar. Tatsächlich sind diese Profile (Sollwertkurven) frei einstellbar, um die Bewegungen der Zieheinheit, des Spritzkolbens und des Düsenkörpers an den jeweiligen Anwendungszweck optimal anpassen zu können.

Vorzugsweise werden die Profile P_{z}, Pₛ und P_{D} jeweils über eine größere Anzahl von Segmenten eingestellt. Im beschriebenen Ausführungsbeispiel wurden 101 Segmente gewählt. Es versteht sich jedoch, dass die Anzahl der Segmente auch anders gewählt werden kann.

Aus den Wegsignalen der Wegsensoren 38 und 42 werden Istwerte für die Geschwindigkeit des Spritzkolbens 10 und der Zieheinheit 6 ermittelt. Dies kann in den Wegsensoren 38 und 42 selbst oder auch im Rechner 40 erfolgen. Die Wegsignale des Wegsensors 40 können unmittelbar als Istwerte für die Positionen des Düsenkörpers 14 verwendet werden.

Der Regler des Rechners 44 kann nun anhand der von den Wegsensoren abgeleiteten Istwerte und der gespeicherten Sollwerte der Geschwindigkeitsprofile P_{Z}, P_{S} und des Positionsprofils P_{D} Stellsignale ermitteln, mit denen die Regelventile 32, 34, 36 und damit die Antriebe 26, 28, 30 des Spritzkolbens 10, des Düsenkörpers 14 und der Zieheinheit 6 geregelt werden. Die Zieheinheit 6, der Spritzkolben 10 und der Düsenkörper 14 führen daher jeweils eine Bewegung entsprechend dem jeweiligen Geschwindigkeitsprofil P_{Z}, P_{S} bzw. Positionsprofil P_{D} aus.

Das Geschwindigkeitsprofil P_{Z} für die Zieheinheit 6 und das Geschwindigkeitsprofil P_{S} für den Spritzkolben 10 sind frei und somit unabhängig voneinander einstellbar. Die Bewegungen der Zieheinheit 6 und des Spritzkolbens 10 müssen daher nicht zeitgleich ablaufen. Sowohl die Dauer wie auch der Start und das Ende ihrer Bewegungen können daher ungleich gewählt werden. Im Ausführungsbeispiel, bei dem die Vorrichtung zur Herstellung eines Faltenbalges dient, werden die Geschwindigkeitsprofile P_{Z} und P_{S} beispielsweise so gewählt, dass die Bewegungen der Zieheinheit 6 und des Spritzkolbens 10 zum selben Zeitpunkt beginnen, jedoch zu unterschiedlichen Zeitpunkten enden.

Wie bereits eingangs erwähnt, ist jedoch auch eine automatische "Synchronisation" zwischen den Bewegungen der Zieheinheit 6 und des Spritzkolbens 10 möglich, wodurch automatisch sichergestellt wird, dass die Dauer der Bewegung des Spritzkolbens und die Dauer der Zieheinheit gleich sind. Zu diesem Zweck ist der Rechner 44 so programmiert, dass er zwischen zwei Betriebszuständen verstellt werden kann. Im einen Betriebszustand sind die Geschwindigkeitsprofile P_{Z} und P_{S} unabhängig voneinander einstellbar. Im anderen Betriebszustand passt das Programm des Rechners 44 das Geschwindigkeitsprofil P_{Z} für die Zieheinheit automatisch an das Geschwindigkeitsprofil P_{S} für den Spritzkolben, oder umgekehrt, an, um die Dauer der Bewegungen des Spritzkolbens und der Zieheinheit gleich zu machen. Wenn daher beispielsweise das Geschwindigkeitsprofil P_{S} für den Spritzkolben geändert wird, um ein Kunststoffgebilde K anderer Wandstärkenverteilung herzustellen, verändert das Programm das Geschwindigkeitsprofil P_{Z} für die Zieheinheit automatisch so, dass durch eine entsprechende Verschiebung von P_{Z} die Bewegungen der Zieheinheit und des Spritzkolbens mit gleicher Dauer ablaufen.

Da das Positionsprofil P_{D} für den Düsenkörper 14 über dem Weg der Zieheinheit 6 oder dem Weg des Spritzkolbens 10 festgelegt ist, folgt der Düsenkörper 14 in seiner Bewegung als "slave" der Zieheinheit bzw. dem Spritzkolben.

Die Geschwindigkeitsprofile P_{Z}, P_{S} und das Positionsprofil P_{D} werden so eingestellt, dass sich bei der Herstellung des Kunststoffkörpers K (Fig. 1) eine gewünschte Wandstärkenverteilung ergibt. Im dargestellten Beispiel der Herstellung eines Faltenbalges, dessen Geometrie durch die Blasformhälfte 24 in Fig. 1 angedeutet ist, entsteht ein schlauchartiges Kunststoffgebilde K mit oszillierend größer und kleiner werdender Wandstärke über seiner Länge.

Die freie Einstellbarkeit der Geschwindigkeitsprofile P_{Z}, P_{S} und des Positionsprofils P_{D} ermöglichen eine optimale Berücksichtigung von den Herstellvorgang störenden Einflüssen wie z. B. einem Nachquellen des Kunststoffes oder einem Durchhängen des schlauchartigen Kunststoffgebildes K.

Eine besonders kritische Stelle ist der Übergang zwischen dem Kopfteil (Formhohlraum 22) und dem mittleren Teil des Kunststoffgebildes K. Wie sich den Diagrammen der Fign. 3 und 4 entnehmen lässt, kann dieser Schwierigkeit durch einen ganz speziellen Kurvenverlauf zu Beginn des Extrusionsvorganges begegnet werden.

Das Ende des aus dem Kunststoffgebilde K hergestellten Faltenbalges muss üblicherweise durch einen gesonderten Schneidvorgang (nicht gezeigt) abgetrennt werden, um ein sauberes Ende des Faltenbalges zu erhalten. Das erfindungsgemäße Verfahren zum Regeln der Geschwindigkeiten der Ziehdüse 6 und des Spritzkolbens 10 sowie der Position des Düsenkörpers 14 ermöglicht eine gezielte und präzise Reduzierung der Wandstärke des abzutrennenden Teils des Kunststoffkörpers K, ohne dass diese Wandstärkenreduzierung den Übergang zwischen dem abzutrennenden Teil und dem übrigen Teil des Kunststoffkörpers K zu beeinträchtigen. Den Diagrammen der Fign. 3 bis 5 lassen sich Beispiele für entsprechend gewählte Geschwindigkeits- und Positionsprofile P_{Z}, P_{S} und P_{D} gegen Ende des Extrusionsvorgangs entnehmen. Hierdurch lässt sich die Menge des beim Abtrennvorgang entstehenden Ausschusses signifikant verringern.

Es sei nochmals darauf hingewiesen, dass die in den Diagrammen der Fign. 3 bis 5 dargestellten Kurve lediglich Beispiele für mögliche Profile sind, wie sie zur Herstellung eines speziellen Faltenbalges gewählt wurden. Zur Herstellung anderer Faltenbälge und insbesondere zur Herstellung anderer schlauchartiger Gegenstände können die frei einstellbaren Profile P_{Z}, P_{S} und P_{D} einen ganz anderen Kurvenverlauf haben.

## Patentansprüche

1. Verfahren zum Herstellen eines schlauchartigen Gegenstandes aus thermoplastischem Kunststoff mittels einer Vorrichtung, welche aufweist:
eine Düse (4) mit einem Düsenmundstück (12) und einem Düsenkörper (14), die zwischen sich eine ringförmige Düsenöffnung (17) bilden, wobei der Düsenkörper (14) relativ zum Düsenmundstück (12) bewegbar ist, um die Querschnittsfläche der Düsenöffnung (17) zu ändern,
eine Extrudiervorrichtung (2) mit einem Spritzkolben (10), der bei seiner Bewegung eine durch den Spritzkolbenweg bestimmte Menge plastifizierten Kunststoffs durch die Düse (4) extrudiert, um ein schlauchartiges Kunststoffgebilde (K) zu erzeugen,
eine Zieheinheit (6), die aus einer Ausgangsstellung angrenzend an der Düse (2) in Richtung weg von der Düse bewegbar ist, um das aus der Düse austretende schlauchartige Kunststoffgebilde (K) während des Extrusionsvorgangs zu führen, wobei der Weg der Zieheinheit (6) die Länge des schlauchartigen Kunststoffgebildes (K) bestimmt, und
eine Regelanlage zum Regeln der Bewegungen des Düsenkörpers (14), des Spritzkolbens (10) und der Zieheinheit (6) entsprechend einem vorgebbaren Programm zwecks Einstellung der Wandstärke des schlauchartigen Kunststoffgebildes (K) über seiner Länge,
bei welchem Verfahren die Bewegungen der Zieheinheit (6) und des Spritzkolbens (10) geschwindigkeitsgeregelt werden und die Bewegung des Düsenkörpers (14) abhängig vom Weg der Zieheinheit positionsgeregelt wird,
**dadurch gekennzeichnet, dass**
dass die Geschwindigkeitsregelung der Zieheinheit (6) und die Geschwindigkeitsregelung des Spritzkolbens (10) in der Weise durchgeführt werden,
dass die Bewegung der Zieheinheit (6) entsprechend einem frei einstellbaren Geschwindigkeitsprofil (P_{Z}) über dem Weg der Zieheinheit (6) und dass die Bewegung des Spritzkolbens (10) entsprechend einem frei einstellbaren Geschwindigkeitsprofil (P_{S}) über dem Weg des Spritzkolbens (10) abläuft, wobei die Geschwindigkeitsprofile (PZ, PS) der Zieheinheit (6) und des Spritzkolbens (10) unabhängig voneinander einstellbar sind, und
dass die Positionsregelung des Düsenkörpers in der Weise durchgeführt wird,
dass die Bewegung des Düsenkörpers (14) entsprechend einem frei einstellbaren Positionsprofil (P_{D}) über dem Weg der Zieheinheit (6) oder dem Weg des Spritzkolbens (10) abläuft, so dass die Bewegung des Düsenkörpers (14) mit gleicher Dauer wie die Bewegung der Zieheinheit (6) oder des Spritzkolbens (10) erfolgt.

2. Verfahren nach Anspruch 1, **dadurch gekennzeichnet, dass** die Geschwindigkeitsprofile (P_{Z}, P_{S}) für die Bewegungen der Zieheinheit (6) und des Spritzkolbens (10) so eingestellt werden, dass die Dauer der Bewegung der Zieheinheit (6) und die Dauer der Bewegung des Spritzkolbens (10) ungleich sind.

3. Verfahren nach Anspruch 1, **dadurch gekennzeichnet, dass** die Geschwindigkeitsprofile (P_{Z}, P_{S}) für die Bewegungen der Zieheinheit (6) und des Spritzkolbens (10) so eingestellt werden, dass die Dauer der Bewegung der Zieheinheit (6) und die Dauer der Bewegung des Spritzkolbens (10) gleich sind.

4. Verfahren nach Anspruch 3, **dadurch gekennzeichnet, dass** die Regelanlage so einstellbar ist, dass das Geschwindigkeitsprofil (P_{Z}) für die Zieheinheit (6) automatisch an das Geschwindigkeitsprofil (P_{S}) für die Bewegung des Spritzkolbens (10), oder umgekehrt, angepasst wird, um die Dauer der Bewegungen der Zieheinheit und des Spritzkolbens gleich zu machen.

5. Verfahren nach einem der Ansprüche 2 bis 4, **dadurch gekennzeichnet, dass** die Geschwindigkeitsprofile (P_{Z}, P_{S}) für die Bewegungen der Zieheinheit (6) und des Spritzkolbens (10) so eingestellt werden, dass die Bewegungen der Zieheinheit (6) und des Spritzkolbens (10) zum selben Zeitpunkt beginnen.

6. Verfahren nach einem der vorhergehenden Ansprüche, **dadurch gekennzeichnet, dass** das Geschwindigkeitsprofil (P_{Z}) für die Bewegung der Zieheinheit (6), das Geschwindigkeitsprofil (P_{S}) für die Bewegung des Spritzkolbens (10) und das Positionsprofil (P_{D}) für die Bewegung des Düsenkörpers (14) jeweils über eine größere Anzahl von Segmenten einstellbar sind.

7. Verfahren nach einem der vorhergehenden Ansprüche, **dadurch gekennzeichnet, dass** vor dem Beginn des Extrusionsvorganges in der Zieheinheit (6) ein Kopfteil spritzgegossen wird, an dem das schlauchartige Kunststoffgebilde (K) während des Extrusionsvorganges von der Zieheinheit (6) geführt wird.

8. Verfahren nach einem der vorhergehenden Ansprüche, **dadurch gekennzeichnet, dass** das schlauchartige Kunststoffgebilde (K) als Vorformling für einen Blasformvorgang dient.

9. Vorrichtung zum Herstellen eines schlauchartigen Gegenstandes aus thermoplastischem Kunststoff mit:
einer Düse (4) mit einem Düsenmundstück (12) und einem Düsenkörper (14), die zwischen sich eine ringförmige Düsenöffnung (17) bilden, wobei der Düsenkörper (14) relativ zum Düsenmundstück (12) bewegbar ist, um die Querschnittsfläche der Düsenöffnung (17) zu ändern,
einer Extrudiervorrichtung (2) mit einem Spritzkolben (10), der bei einer Ausstoßbewegung eine durch den Spritzkolbenweg bestimmte Menge plastifizierten Kunststoffs durch die Düse (4) extrudiert, um ein schlauchartiges Kunststoffgebilde (4) zu erzeugen,
einer Zieheinheit (6), die aus einer Ausgangsstellung angrenzend an der Düse (2) in Richtung weg von der Düse bewegbar ist, um das aus der Düse austretende schlauchartige Kunststoffgebilde (K) während des Extrusionsvorgangs zu führen, wobei der Weg der Zieheinheit (6) die Länge des Kunststoffgebildes (K) bestimmt, und
einer Regelanlage mit vorgebbaren Programm, mit dem die Bewegungen der Zieheinheit (6) und des Spritzkolbens (10) geschwindigkeitsgeregelt werden und die Bewegung des Düsenkörpers (14) abhängig vom Weg der Zieheinheit (6) positionsgeregelt wird,
**dadurch gekennzeichnet,**
**dass** die Regelanlage so ausgebildet ist,
**dass** die Bewegung der Zieheinheit (6) entsprechend einem frei einstellbaren Geschwindigkeitsprofil (P_{Z}) über dem Weg der Zieheinheit (6) und die Bewegung des Spritzkolbens (10) entsprechend einem frei einstellbaren Geschwindigkeitsprofil (P_{S}) über dem Weg des Spritzkolbens (10) abläuft,
und **dass** die Bewegung des Düsenkörpers (14) entsprechend einem frei einstellbaren Positionsprofil (P_{D}) über dem Weg der Zieheinheit (6) oder dem Weg des Spritzkolbens (10) abläuft, so dass die Bewegung des Düsenkörpers (14) mit gleicher Dauer wie die Bewegung der Zieheinheit (6) oder des Spritzkolbens (10) erfolgt.

10. Vorrichtung nach Anspruch 9, **dadurch gekennzeichnet, dass** die Regelanlage aufweist:
einen Wegsensor (42) zum Bestimmen von Istwerten der Geschwindigkeit der Zieheinheit (6),
einen Wegsensor (38) zum Bestimmen von Istwerten der Geschwindigkeit des Spritzkolbens (10),
einen Wegsensor (40) zum Bestimmen von Istwerten der Positionen des Düsenkörpers (14), und
einen Rechner (44) mit einem Regler, der in Abhängigkeit von Differenzen zwischen den Istwerten und Sollwerten der Geschwindigkeitsprofile (P_{Z}, P_{S}) für die Bewegungen der Zieheinheit (6) und des Spritzkolbens (10) sowie des Positionsprofils (P_{D}) für die Bewegungen des Düsenkörpers (14) Stellsignale für Antriebe (30, 26, 28) der Zieheinheit (6), des Spritzkolbens (10) und des Düsenkörpers (14) erzeugt.

## Claims

1. Method for producing a tubular object from thermoplastic material by means of a device which comprises:
a die (4) with a die land (12) and a die body (14) which form, between them, an annular die opening (17), the die body (14) being movable relative to the die land (12) in order to alter the cross-sectional surface of the die opening (17),
an extrusion device (2) with a plunger (10) which during its movement extrudes a specific quantity of plasticised plastic material determined by the plunger path through the die (4) in order to produce a tubular plastic object (K),
a withdrawal unit (6) which is movable from an initial position adjacent to the die (2) in the direction away from the die, in order to guide the tubular plastic object (K) emerging from the die, during the extrusion process, the path of the withdrawal unit (6) determining the length of the tubular plastic object (K) and
a control unit for controlling the movements of the die body (14), the plunger (10) and the withdrawal unit (6), according to a predeterminable program for the purpose of adjusting the wall thickness of the tubular plastic object (K) over its length,
in which method the movements of the withdrawal unit (6) and the plunger (10) are velocity controlled and the movement of the die body (14) is position controlled depending on the path of the withdrawal unit,
**characterized in that**
**that** the velocity control of the withdrawal unit (6) and the velocity control of the plunger (10) are carried out in such a way that
the movement of the withdrawal unit (6) is carried out according to a freely adjustable velocity profile (P_{Z}) over the path of the withdrawal unit (6) and that the movement of the plunger (10) is carried out according to a freely adjustable velocity profile (P_{S}) over the path of the plunger (10), wherein the velocity profiles (P_{Z}, P_{S}) of the withdrawal unit (6) and of the plunger (10) are independently of each other adjustable, and
the movement of the die body (14) is carried out according to a freely adjustable position profile (P_{D}) over the path of the withdrawal unit (6) or the path of the plunger (10), so that the movement of the die body (14) is carried out for the same duration as the movement of the withdrawal unit (6) or the plunger (10).

2. Method according to Claim 1, **characterised in that** the velocity profiles (P_{Z}, P_{S}) for the movements of the withdrawal unit (6) and the plunger (10) are adjusted such that the duration of the movement of the withdrawal unit (6) and the duration of the movement of the plunger (10) are unequal.

3. Method according to Claim 1, **characterised in that** the velocity profiles (P_{Z}, P_{S}) for the movements of the withdrawal unit (6) and the plunger (10) are adjusted such that the duration of the movement of the withdrawal unit (6) and the duration of the movement of the plunger (10) are equal.

4. Method according to Claim 3, **characterised in that** the control unit may be adjusted such that the velocity profile (P) for the withdrawal unit (6) is automatically adapted to the velocity profile (P_{S}) for the movement of the plunger (10) or vice-versa, in order to make the duration of the movements of the withdrawal unit and the plunger equal.

5. Method according to any of the Claims 2 to 4, **characterised in that** the velocity profiles (P_{Z}, P_{S}) for the movements of the withdrawal unit (6) and the plunger (10) are adjusted such that the movements of the withdrawal unit (6) and the plunger (10) start at the same time.

6. Method according to any of the preceding claims, **characterised in that** the velocity profile (P_{Z}) for the movement of the withdrawal unit (6), the velocity profile (P_{S}) for the movement of the plunger (10) and the position profile (P_{D}) for the movement of the die body (14) may be respectively adjusted over a larger number of segments.

7. Method according to any of the preceding claims, **characterised in that**, before the start of the extrusion process, in the withdrawal unit (6) a head part is injection-moulded, on which the tubular plastic object (K) is guided during the extrusion process by the withdrawal unit (6).

8. Method according to any of the preceding claims, **characterised in that** the tubular plastic object (K) serves as a preform for a blow-moulding process.

9. Device for producing a tubular object from thermoplastic material with:
a die (4) with a die land (12) and a die body (14) which form, between them, an annular die opening (17), the die body (14) being movable relative to the die land (12) in order to alter the cross-sectional surface of the die opening (17),
an extrusion device (2) with a plunger (10) which, with an ejection movement, extrudes a specific quantity of plasticised plastic material through the die (4), determined by the plunger path, in order to produce a tubular plastic object (K),
a withdrawal unit (6) which is movable from an initial position adjacent to the die (2) in the direction away from the die, in order to guide the tubular plastic object (K) emerging from the die, during the extrusion process, the path of the withdrawal unit (6) determining the length of the plastic object (K), and
a control unit having a predeterminable program with which the movements of the withdrawal unit (6) and the plunger (10) are velocity controlled and the movement of the die body (14) is position controlled depending on the path of the withdrawal unit (6),
**characterized in that**
the control unit is formed such that
the movement of the withdrawal unit (6) is carried out according to a freely adjustable velocity profile (Pz) over the path of the withdrawal unit (6) and the movement of the plunger (10) is carried out according to a freely adjustable velocity profile (P_{S}) over the path of the plunger (10),
and the movement of the die body (14) is carried out according to a freely adjustable position profile (P_{D}) over the path of the withdrawal unit (6) or the path of the plunger (10), so that the movement of the die body (14) is carried out for the same duration as the movement of the withdrawal unit (6) or the plunger (10).

10. Device according to Claim 9, **characterised in that** the control unit comprises:
a path sensor (42) for determining actual values of the velocity of the withdrawal unit (6),
a path sensor (38) for determining actual values of the velocity of the plunger (10),
a path sensor (40) for determining actual values of the positions of the die body (14),
and
a computer (44) with a controller which, depending on the differences between the actual values and the reference values of the velocity profiles (P_{Z}, P_{S}) for the movements of the withdrawal unit (6) and the plunger (10) as well as the position profile (P_{D}) for the movements of the die body (14), generates control signals for drives (30, 26, 28) of the withdrawal unit (6), the plunger (10) and the die body (14).

## Revendications

1. Procédé destiné à la fabrication d'un objet de type tuyau en matière synthétique thermoplastique au moyen d'un dispositif qui présente :
une filière (4) avec un embout de filière (12) et un corps de filière (14), qui forment entre eux une ouverture de filière annulaire (17), dans lequel le corps de filière (14) est mobile par rapport à l'embout de filière (12) pour modifier la surface de la section de l'ouverture de filière (17),
un dispositif d'extrusion (2) avec un piston d'injection (10), qui, lors de son mouvement, extrude une quantité déterminée par la course de piston d'injection de matière synthétique plastifiée à travers la filière (4) pour réaliser un produit en matière synthétique de type tuyau (K),
une unité de tirage (6), qui est mobile d'une position initiale adjacente à la filière (2) dans la direction s'éloignant de la filière pour guider le produit en matière synthétique de type tuyau (K) sortant de la filière pendant le processus d'extrusion, dans lequel la course de l'unité de tirage (6) détermine la longueur du produit en matière synthétique de type tuyau (K), et
une installation de régulation pour réguler les mouvements du corps de filière (14), du piston d'injection (10) et de l'unité de tirage (6) en concordance avec un programme prédéfinissable dans le but de régler l'épaisseur de paroi du produit en matière synthétique de type tuyau (K) sur sa longueur,
lors duquel procédé les mouvements de l'unité de tirage (6) et du piston d'injection (10) sont régulés quant à leur vitesse et le mouvement du corps de filière (14) est régulé quant à sa position en fonction de la course de l'unité de tirage, **caractérisé en ce que**
la régulation de la vitesse de l'unité de tirage (6) et la régulation de la vitesse du piston d'injection (10) sont exécutées de telle manière
que le mouvement de l'unité de tirage (6) se déroule en concordance avec un profil de vitesse (P_{Z}) réglable librement sur la course de l'unité de tirage (6) et que le mouvement du piston d'injection (10) se déroule en concordance avec un profil de vitesse (P_{S}) réglable librement sur la course du piston d'injection (10), dans lequel les profils de vitesse (PZ, PS) de l'unité de tirage (6) et du piston d'injection (10) sont réglables indépendamment l'un de l'autre, et
**en ce que** la régulation de position du corps de filière est exécutée de telle manière
que le mouvement du corps de filière (14) se déroule en concordance avec un profil de position (P_{D}) réglable librement sur la course de l'unité de tirage (6) ou la course du piston d'injection (10), de sorte que le mouvement du corps de filière (14) a lieu avec la même durée que le mouvement de l'unité de tirage (6) ou du piston d'injection (10).

2. Procédé selon la revendication 1, **caractérisé en ce que** les profils de vitesse (P_{Z}, P_{S}) pour les mouvements de l'unité de tirage (6) et du piston d'injection (10) sont réglés de telle sorte que la durée du mouvement de l'unité de tirage (6) et la durée du mouvement du piston d'injection (10) sont différentes.

3. Procédé selon la revendication 1, **caractérisé en ce que** les profils de vitesse (P_{Z}, P_{S}) pour les mouvements de l'unité de tirage (6) et du piston d'injection (10) sont réglés de telle sorte que la durée du mouvement de l'unité de tirage (6) et la durée du mouvement du piston d'injection (10) sont égales.

4. Procédé selon la revendication 3, **caractérisé en ce que** l'installation de régulation est réglable de telle sorte que le profil de vitesse (P_{Z}) pour l'unité de tirage (6) est adapté automatiquement au profil de vitesse (P_{S}) pour le mouvement du piston d'injection (10), ou inversement, pour rendre égale la durée des mouvements de l'unité de tirage et du piston d'injection.

5. Procédé selon l'une des revendications 2 à 4, **caractérisé en ce que** les profils de vitesse (P_{Z}, P_{S}) pour les mouvements de l'unité de tirage (6) et du piston d'injection (10) sont réglés de telle sorte que les mouvements de l'unité de tirage (6) et du piston d'injection (10) commencent au même moment.

6. Procédé selon l'une des revendications précédentes, **caractérisé en ce que** le profil de vitesse (P_{Z}) pour le mouvement de l'unité de tirage (6), le profil de vitesse (P_{S}) pour le mouvement du piston d'injection (10) et le profil de position (P_{D}) pour le mouvement du corps de filière (14) sont réglables respectivement sur un nombre élevé de segments.

7. Procédé selon l'une des revendications précédentes, **caractérisé en ce qu'**avant le début du processus d'extrusion, une partie de tête, sur laquelle le produit en matière synthétique de type tuyau (K) est guidé pendant le processus d'extrusion par l'unité de tirage (6), est moulée par injection dans l'unité de tirage (6).

8. Procédé selon l'une des revendications précédentes, **caractérisé en ce que** le produit en matière synthétique de type tuyau (K) sert de préforme pour un processus de moulage par soufflage.

9. Dispositif destiné à la fabrication d'un objet de type tuyau en matière synthétique thermoplastique comprenant :
une filière (4) avec un embout de filière (12) et un corps de filière (14) qui forment entre eux une ouverture de filière annulaire (17), dans lequel le corps de filière (14) est mobile par rapport à l'embout de filière (12) pour modifier la surface de la section de l'ouverture de filière (17),
un dispositif d'extrusion (2) avec un piston d'injection (10), qui, lors d'un mouvement d'éjection, extrude une quantité déterminée par la course du piston d'injection de matière synthétique plastifiée à travers la filière (4), pour réaliser un produit en matière plastique de type tuyau (4),
une unité de tirage (6), qui est mobile d'une position initiale adjacente à la filière (2) dans la direction s'éloignant de la filière pour guider le produit en matière synthétique de type tuyau (K) sortant de la filière pendant le processus d'extrusion, dans lequel la course de l'unité de tirage (6) détermine la longueur du produit en matière synthétique (K), et
une installation de régulation avec programme prédéfinissable, avec lequel les mouvements de l'unité de tirage (6) et du piston d'injection (10) sont régulés quant à leur vitesse et le mouvement du corps de filière (14) est régulé quant à sa position en fonction de la course de l'unité de tirage (6),
**caractérisé en ce que**,
l'installation de régulation est conçue de telle sorte
que le mouvement de l'unité de tirage (6) se déroule en concordance avec un profil de vitesse (P_{Z}) réglable librement sur la course de l'unité de tirage (6) et le mouvement du piston d'injection (10) se déroule en concordance avec un profil de vitesse (P_{S}) réglable librement sur la course du piston d'injection (10),
et **en ce que** le mouvement du corps de filière (14) se déroule en concordance avec un profil de position (P_{D}) réglable librement sur la course de l'unité de tirage (6) ou la course du piston d'injection (10), de sorte que le mouvement du corps de filière (14) a lieu avec la même durée que le mouvement de l'unité de tirage (6) ou du piston d'injection (10).

10. Dispositif selon la revendication 9, **caractérisé en ce que** l'installation de régulation présente :
un capteur de route (42) pour déterminer des valeurs réelles de la vitesse de l'unité de tirage (6),
un capteur de route (38) pour déterminer des valeurs réelles de la vitesse du piston d'injection (10),
un capteur de route (40) pour déterminer des valeurs réelles des positions du corps de filière (14), et
un ordinateur (44) avec un régulateur, qui génère, en fonction de différences entre les valeurs réelles et les valeurs de consigne des profils de vitesse (P_{Z}, P_{S}) pour les mouvements de l'unité de tirage (6) et du piston d'injection (10) ainsi que du profil de position (P_{D}) pour les mouvements du corps de filière (14), des signaux de commande pour des entraînements (30, 26, 28) de l'unité de tirage (6), du piston d'injection (10) et du corps de filière (14).
